**Europäisches Patentamt**

**European Patent Office**

**Office européen des brevets**

(11) Veröffentlichungsnummer: **0 170 056**
**B1**

(12) **EUROPÄISCHE PATENTSCHRIFT**

(45) Veröffentlichungstag der Patentschrift:
24.08.88

(51) Int. Cl.⁴: **H 02 K 33/18,** H 04 R 9/00

(21) Anmeldenummer: **85107954.1**

(22) Anmeldetag: **27.06.85**

(54) **Elektrischer Flachspulenantrieb.**

(30) Priorität: **14.07.84 DE 3426042**

(43) Veröffentlichungstag der Anmeldung:
**05.02.86 Patentblatt 86/6**

(45) Bekanntmachung des Hinweises auf die Patenterteilung:
**24.08.88 Patentblatt 88/34**

(84) Benannte Vertragsstaaten:
**AT CH DE FR GB IT LI NL**

(56) Entgegenhaltungen:
**DE - A - 2 654 075**
**FR - A - 1 254 923**
**GB - A - 899 678**
**GB - A - 989 169**
**US - A - 3 136 934**
**US - A - 3 935 399**

(73) Patentinhaber: **VACUUMSCHMELZE GMBH, Grüner Weg 37 Postfach 2253, D-6450 Hanau 1 (DE)**

(72) Erfinder: **Erd, Ludwig, Dipl.-Ing., Havelbergerstrasse 17, D-1000 Berlin 21 (DE)**
Erfinder: **Menzel, Klaus, Dr. Dipl.-Ing., Remstalerstrasse 26, D-1000 Berlin 28 (DE)**

## Beschreibung

Die Erfindung betrifft einen elektrischen Antrieb mit einer Flachspule, die in Richtung der Spulenebene beweglich gelagert ist, und mit mindestens einem Dauermagneten (3), der in der Spulenebene ein zu dieser im wesentlichen senkrecht gerichtetes magnetisches Feld erzeugt, und mit mindestens einer Platte aus elektrisch leitfähigem Material, die in der Nähe der Flachspule parallel zu den Leitern der Flachspule ortsfest angeordnet ist.

Ein derartiger Antrieb eignet sich insbesondere für begrenzte, alternierende, lineare Bewegungen, die in einer Richtung oder auf einer Kreisbahn, z.B. für den Antrieb von Druckernadeln, Verwendung finden.

Eine derartige Einrichtung (doch mit Elektromagneten) ist aus der GB-PS 899 678 bekannt. Hier sind die einzelnen Magnetpole, die ein auf die Spule wirkendes Feld führen, mit einer leitenden Platte oder mit einem Kurzschlussgitter aus leitendem Material versehen. Diese Bedeckung der Magnetpole aus einem elektrisch leitenden Material verringert die magnetischen Einwirkungen des in der Spule fliessenden Stromes im Bereich der Magnetpolenden. Der durch die stromdurchflossene Flachspule erzeugte Hauptfluss kann allerdings durch die leitende Beschichtung der Magnetpole nicht wesentlich beeinflusst werden.

Aus der DE-OS 26 54 075, insbesondere Figur 1, ist es bekannt, Dauermagnete in einer Reihe mit abwechselnder Polarität anzuordnen und zwischen diesen Magneten stromdurchflossene Flachspulen vorzusehen, die in Richtung ihrer Spulenebene längsverschieblich gelagert sind.

Aufgabe der vorliegenden Erfindung ist es, einen derartigen Antrieb so auszulegen, dass bei gegebener Spannung an der zu verwendenden Flachspule ein schneller Stromanstieg bei einfachem Aufbau des Antriebssystems ermöglicht wird. Da der Strom in der sich in einem Magnetfeld befindlichen, beweglich gelagerten Flachspule massgebend für die auf die Flachspule wirkende Kraft ist, lässt sich bei Beschleunigung des Stromanstiegs bzw. der Stromabnahme in der Flachspule ein schnelleres Ansprechen des Antriebes auf Spannungsimpulse erzielen.

Diese Aufgabe wird erfindungsgemäss dadurch gelöst, dass die Abmessungen der Platte so gross gewählt sind, dass in jeder möglichen Position der Flachspule diese immer von der Platte vollständig abgedeckt ist.

In den Figuren 1, 3, 4 und 5 sind Querschnitte durch verschiedene Ausführungsbeispiele des für den elektrischen Antrieb vorgesehenen Magnetsystems dargestellt.

Figur 2 zeigt eine Draufsicht auf das Magnetsystem, das hier zur Bewegung entsprechend eines Kreissegmentes ausgelegt ist. In allen Figuren sind gleiche Teile mit gleichen Bezugszeichen versehen.

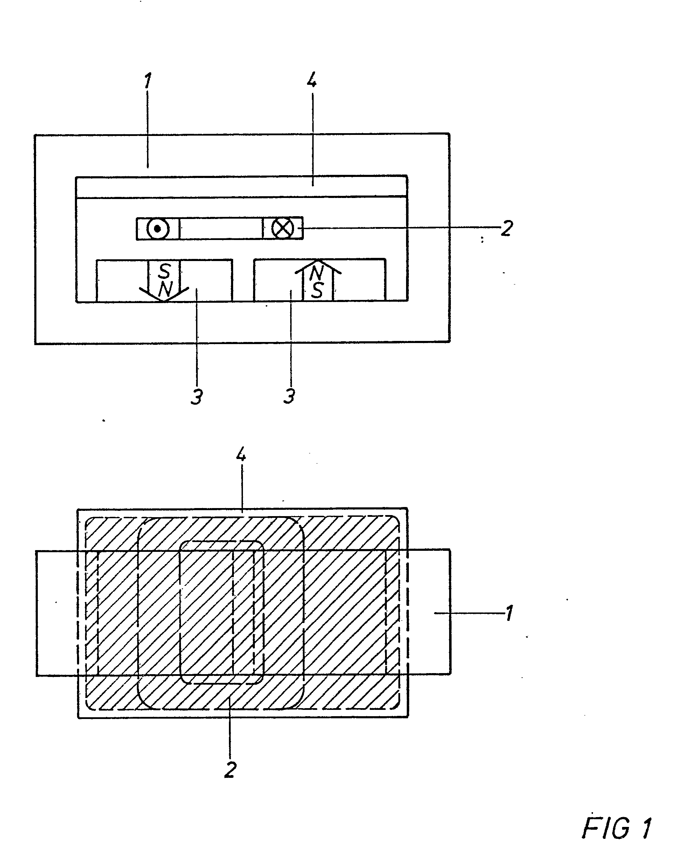

Figur 1 zeigt einen elektrischen Antrieb in zwei Ansichten mit einem rechteckförmigen Eisenkern 1, der als Rückschluss für das von zwei Dauermagneten 3 erzeugte magnetische Feld dient. Die Dauermagnete 3 sind dabei in der Nähe einer Flachspule 2 angeordnet. Die Flachspule 2 wird als solche bezeichnet, da deren Abmessungen in Richtung der Spulenachse klein sind gegenüber dem Abstand der einander gegenüberliegenden Abschnitte einer Windung der Spule. Die Windungen sind jeweils zu einem Rechteck gewickelt, so dass der Strom innerhalb der Flachspule auf einem grossen Teil seines Weges eine in einer Richtung wirkende Kraft erzeugt. Die Flachspule 2 ist, wie in Figur 1 im einzelnen nicht dargestellt ist, so längsbeweglich gelagert, dass sie sich innerhalb der Spulenebene nach rechts bzw. links verschieben lässt. In dieser Richtung wirken die auf die Spulenleiter einwirkenden magnetischen Kräfte, wenn die Spule von einem Strom durchflossen wird. An der den Dauermagneten 3 gegenüberliegenden Seite der Flachspule ist der Eisenkern 1 mit einer leitfähigen Platte 4 versehen, die beispielsweise aus Kupfer bestehen kann.

Diese Platte 4 besitzt einen so grossen Querschnitt, dass in jeder Position der Flachspule 2 deren Leiter neben einem Teil der Platte angeordnet sind. Damit wird bei einfachster Formgebung für die elektrisch leitfähige Platte 4 erreicht, dass sich in dieser bei einer Stromänderung in der Flachspule 2 ein Wirbelstrom ausbilden kann, der weitgehend parallel zu den Spulenleitern der Flachspule 2 verläuft und der damit einen schnellen Anstieg bzw. eine schnelle Abnahme des Stromes innerhalb der Flachspule gestattet, ohne dass zu grosse Magnetfeldänderungen in dem aus Eisenkern 1 und aus den Dauermagneten 3 gebildeten magnetischen Kreis stattfinden.

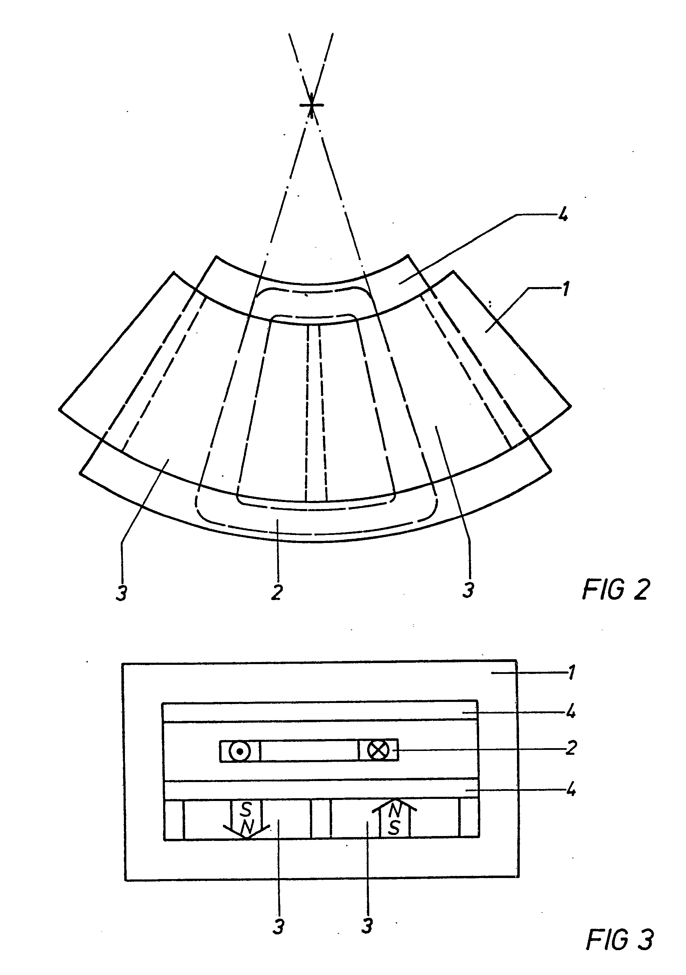

Figur 2 zeigt eine der Figur 1 entsprechende Darstellung für den Fall, dass die Bewegung der Flachspule 2 längs eines Kreissegmentes erfolgt. Hier ist – wiederum zur Erzielung maximaler Kräfte in Bewegungsrichtung – die Spule 2 ebenfalls kreissegmentförmig gewickelt. Die Platte 4 hat wiederum eine Ausdehnung, die auch die für die Antirebskraft nicht beitragenden Teile der Spule abdeckt. Auch die Dauermagnete 3 sind kreissegmentförmig angeordnet. Ihr Winkelbereich entspricht demjenigen, den die Spule 2 überdeckt, um zu gewährleisten, dass auf der gesamten, von der Flachspule 2 zu überstreichenden Bahn jeweils unterschiedliche Polaritäten auf die beiden in entgegengesetzten Richtungen zueinander durchflossenen Schenkel der Flachspule 2 einwirken. Es ist jedoch nicht erforderlich, zwei Dauermagnete vorzusehen, da eine Kraft auf die Spule auch schon dann wirksam ist, wenn nur ein Dauermagnet, der auf einen Schenkel der Spule einwirkt, vorhanden ist.

Figur 3 entspricht im wesentlichen der Darstellung nach Figur 1, wobei die Flachspule 2 sowohl auf einer linearen als auch auf einer Kreisbahn innerhalb der Spulenebene verschiebbar gelagert angeordnet sein kann. Bei dieser Anordnung wird eine weitere Verringerung der Ansprechzeit dadurch erreicht, dass auch die Dauermagnete 3 von einer Platte 4 bedeckt sind. Anstelle der Kupferplatte 4 ist es selbstverständlich auch möglich, im Bereich des Eisenkerns 1 bzw. der Dauermagnete 3 den Eisenkern und/oder die Dauermagnete mit einer leitfähigen Schicht zu überziehen.

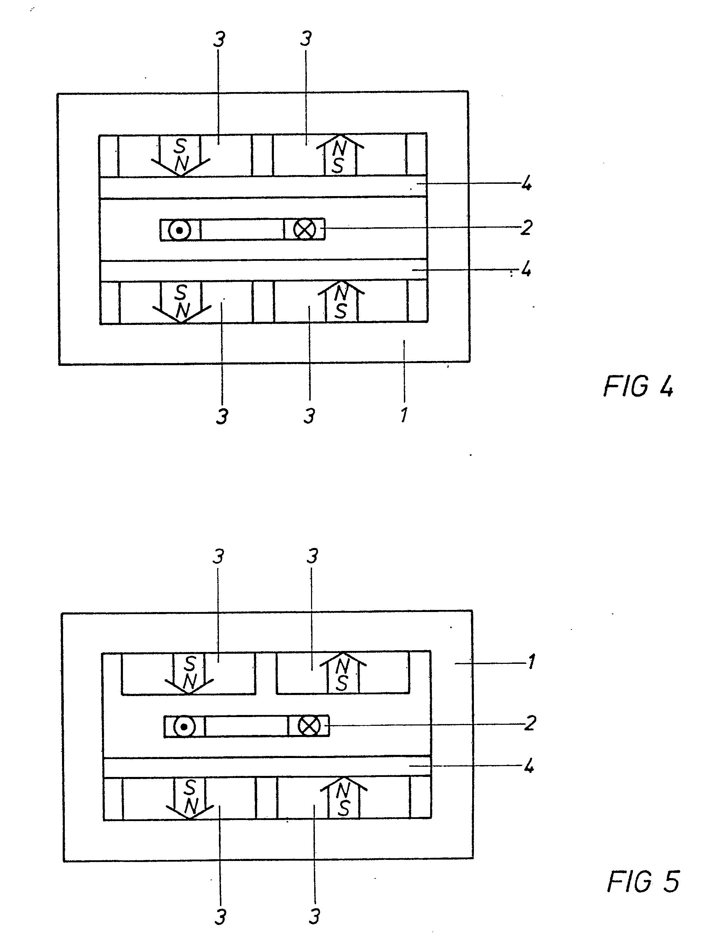

Figur 4 zeigt eine Anordnung, bei der die Flachspule zwischen je zwei Paar Dauermagneten 3 angeordnet ist, die beide von einer leitfähigen Platte 4 bedeckt sind.

In Figur 5 ist lediglich ein Paar Dauermagnete mit einer leitfähigen Platte 4 versehen.

**Patentansprüche**

1. Elektrischer Antrieb mit einer Flachspule (2), die in Richtung der Spulenebene beweglich gelagert ist, und mit mindestens einem Dauermagneten (3), der in der Spulenebene ein zu dieser im wesentlichen senkrecht gerichtetes magnetisches Feld erzeugt, und mit mindestens einer Platte (4) aus elektrisch leitfähigem Material, die in der Nähe der Flachspule (2) parallel zu den Leitern der Flachspule (2) ortsfest angeordnet ist, dadurch gekennzeichnet, dass die Abmessungen der Platte (4) so gross gewählt sind, dass in jeder möglichen Position der Flachspule (2) diese immer von der Platte vollständig abgedeckt ist.

2. Elektrischer Antrieb nach Anspruch 1, dadurch gekennzeichnet, dass Flachspule (2), Dauermagnete (3) und die Platte (4) im Innern eines Eisenkerns (1) so angeordnet sind, dass sich die Flachspule (2) zwischen der Platte (4) und den Dauermagneten (3) befindet.

3. Elektrischer Antrieb nach Anspruch 2, dadurch gekennzeichnet, dass anstelle einer Platte (4) eine Beschichtung des Eisenkerns (1) mit leitfähigem Material vorgesehen ist.

4. Elektrischer Antrieb nach Anspruch 1, dadurch gekennzeichnet, dass anstelle der Platte (4) die Dauermagnete (3) mit einer Beschichtung aus leitfähigem Material versehen sind.

5. Elektrischer Antrieb nach Anspruch 1, dadurch gekennzeichnet, dass sich beidseitig der Flachspule (2) je ein Paar Dauermagnete (3) befinden, von denen mindestens ein Paar Dauermagnete mit einer Platte (4) aus leitfähigem Material bedeckt sind.

6. Elektrischer Antrieb nach Anspruch 1, dadurch gekennzeichnet, dass die Flachspule (2) in der Spulenebene auf einer kreissegmentförmigen Bahn verschiebbar gelagert ist.

**Revendications**

1. Moteur électrique avec une bobine plate (2) qui est montée de façon à pouvoir se déplacer en direction du plan de bobine, avec au moins un aimant permanent (3) qui engendre dans le plan de la bobine un champ magnétique essentiellement dirigé perpendiculairement à ce plan, et avec au moins une plaque (4) en un matériau électriquement conducteur, qui est disposé à poste fixe au voisinage de la bobine plate (2) parallèlement au conducteur de cette bobine plate (2), moteur électrique caractérisé en ce que les dimensions de la plaque (4) sont choisies suffisamment importantes pour que dans chaque position possible de la bobine plate (2) celle-ci soit toujours complètement recouverte par la plaque.

2. Moteur électrique selon la revendication 1, caractérisé en ce que la bobine plate (2), l'aimant permanent (3) et la plaque (4) sont disposés de façon telle à l'intérieur d'un noyau de fer (1) que la bobine plate (2) se trouve entre la plaque (4) et l'aimant permanent (3).

3. Moteur électrique selon la revendication 2, caractérisé en ce qu'au lieu d'une plaque (4) il est prévu un revêtement du noyau de fer (1) avec un matériau conducteur.

4. Moteur électrique selon la revendication 1, caractérisé en ce qu'au lieu de la plaque (4) les aimants permanents (3) sont prévus avec un revêtement en un matériau conducteur.

5. Moteur électrique selon la revendication 1, caractérisé en ce que de chaque côté de la bobine plate (2) se trouvent respectivement une paire d'aimants permanents (3), l'une de ces paires au moins étant recouverte d'une plaque (4) en un matériau conducteur.

6. Moteur électrique selon la revendication 1, caractérisé en ce que la bobine plate (2) est montée de façon à pouvoir se déplacer dans le plan de bobine sur une trajectoire en forme de segment de cercle.

**Claims**

1. Electric drive having a flat coil (2) which is mounted movably in the coil plane, having at least one permanent magnet (3) which generates in the coil plane a magnetic field oriented substantially at right angles thereto, also having at least one plate (4) made of electrically conductive material which is arranged stationary in the proximity of the flat coil (2) parallel to the conductors of the flat coil (2), characterised in that the dimensions of the plate (4) are such that the flat coil (2), in all its possible positions, is always totally masked by the plate.

2. Electric drive according to Patent Claim 1, characterised in that flat coil (2), permanent magnets (3) and the plate (4) are arranged in the interior of an iron core (1) so that the flat coil (2) is located between the plate (4) and the permanent magnets (3).

3. Electric drive according to Patent Claim 2, characterised in that a coating of the iron core (1) with conductive material is provided instead of the plate (4).

4. Electric drive according to Patent Claim 1, characterised in that the permanent magnets (3) are provided with a coating of conductive material instead of the plate (4).

5. Electric drive according to Patent Claim 1, characterised in that a pair of permanent magnets (3) is provided on each side of the flat coil (2), of which at least one pair of permanent magnets are covered with a plate (4) of conductive material.

6. Electric drive according to Patent Claim 1, characterised in that the flat coil (2) is mounted slidably on a circular segment-shaped track in the coil plane.

FIG 1

FIG 2

FIG 3

3/3

FIG 4

FIG 5